# EUROPÄISCHE PATENTSCHRIFT

(11) **EP 1 084 159 B1**
(45) Veröffentlichungstag und Bekanntmachung des Hinweises auf die Patenterteilung: **15.09.2004**
(21) Anmeldenummer: 99919244.6
(22) Anmeldetag: 16.04.1999
(51) Int. Cl.: C08F 10/00, C08F 4/60

(54) **KATALYSATORSYSTEM MIT METALLOCENEN MIT FLUORHALTIGEN SUBSTITUENTEN**
CATALYST SYSTEM COMPOSED OF METALLOCENES COMPRISING SUBSTITUENTS CONTAINING FLUORINE
SYSTEME CATALYSEUR COMPOSE DE METALLOCENES COMPRENANT DES SUBSTITUANTS FLUORES

(30) Priorität: 21.04.1998 DE 19817726; 21.04.1998 DE 19817725
(43) Veröffentlichungstag der Anmeldung: 21.03.2001
(73) Patentinhaber: Basell Polyolefine GmbH, 50389 Wesseling (DE)
(72) Erfinder: FRITZE, Cornelia, D-60529 Frankfurt (DE); ERKER, Gerhard, D-48159 Münster (DE); RUWWE, Johannes, D-48147 Münster (DE)
(74) Vertreter: Seelert, Stefan, Dr.
(86) Internationale Anmeldenummer: PCT/EP1999/002562
(87) Internationale Veröffentlichungsnummer: WO 1999/054367

(56) Entgegenhaltungen:
- JANY G ET AL: "para-Fluoro benzyl substituted bis(indenyl) metallocenes as catalyst precursors in ethene polymerization" JOURNAL OF ORGANOMETALLIC CHEMISTRY, Bd. 553, Nr. 1-2, 25. Februar 1998 (1998-02-25), Seite 173-178 XP004119631 ISSN: 0022-328X
- DATABASE WPI Derwent Publications Ltd., London, GB; AN 95-128369 XP002112498 & JP 07 053621 A (MITSUBISHI KASEI CORP), 28. Februar 1995 (1995-02-28)

## Beschreibung

Die vorliegende Erfindung betrifft ein Katalysatorsystem aus Metallocenen mit fluorhaltigen Substituenten, ein Verfahren zur Herstellung sowie seine Verwendung zur Polymerisation von Olefinen.

Eine der ersten Reaktionen, bei der ein Metallocen der vierten Nebengruppe mit fluorhaltigen Liganden umgesetzt wird, beschreibt die Flash-Pyrolyse von Cp₂Ti(C₆F₅)₂ (J. Organomet. Chem. 1963, 1, 98; J. Organomet. Chem. 1964, 2, 206). Dabei tritt die Wanderung eines Fluoratoms ein.
Eine wichtige Rolle spielen perfluorierte Liganden für die Stabilisierung elektronendefizienter Metallzentren. Beispielsweise erfolgt die Stabilisierung von kationischen Metallocenen bei der Ziegler-Natta-Polymerisation durch perfluorierte Tetraphenylborate (M. Bochmann, Nachr. Chem. Lab. Techn. 1993, 41,1220).

Ein elektronendefizientes Metallzentrum zu stabilisieren, gelingt auch mit einem teilweise fluorierten Anion in der Reaktion von Dimethylzirconocenverbindungen mit [PhMe₂NH]⁺[B(C₆H₄F)₄]⁻ (Organometallics 1991, 10, 3910). Die Koordination eines F-Atoms des Anions an das Metallzentrum kann mittels ¹⁹F-NMR-Spektroskopie nachgewiesen werden.

Durch die Umsetzung von Butadien(zirconocen) mit der Lewissäure B(C₆F₅)₃ entsteht ein Betain, in dem das kationische Metallzentrum durch die Koordination eines Fluoratoms des Pentafluorphenylrestes stabilisiert wird (Angew. Chem. 1995, 107, 1867). In diesem Falle ist die Koordination nur schwach, so daß der labile Ligand durch Monomere verdrängt werden kann.

Die bisher genannten Verbindungen beschreiben Wechselwirkungen kationischer Metallocene mit aromatischen fluorhaltigen Liganden. Die Verwendung von teilweise fluorierten oder perfluorierten aliphatischen Substituenten an Cyclopentadienylliganden der Metallocene ist nur in Einzelfällen beschrieben.

So ist ein Titanocen bekannt, bei dem eine Trifluormethylgruppe an einen Cyclopentadienylliganden gebunden ist (JACS 1986, 108, 4228).
Eine intramolekulare Koordination eines Fluoratoms an das Metallzentrum ist hier aufgrund der Geometrie kaum möglich.
In EP-A-791607 werden substituierte Metallocene beschrieben, in denen mindestens ein Cyclopentadienylring mit einem fluorhaltigen Benzylrest substituiert ist.
Es bestand nun die Aufgabe ein Katalysatorsystem, das Metallocene mit fluorhaltigen Substituenten enthält, zur Verfügung zu stellen.

Gegenstand der vorliegenden Erfindung ist ein Katalysatorsystem, das mindestens ein Metallocen mit fluorhaltigen Substituenten und mindestens eine Cokatalysatorkomponente enthält und gegebenenfalls geträgert sein kann, sowie ein Verfahren zu seiner Herstellung und seine Verwendung in der Polymerisation von Propylen.

Das erfindungsgemäße Katalysatorsystem enthält
(a) mindestens einen Cokatalysator,
(b) mindestens eine metallorganische Verbindung der Formel (I) 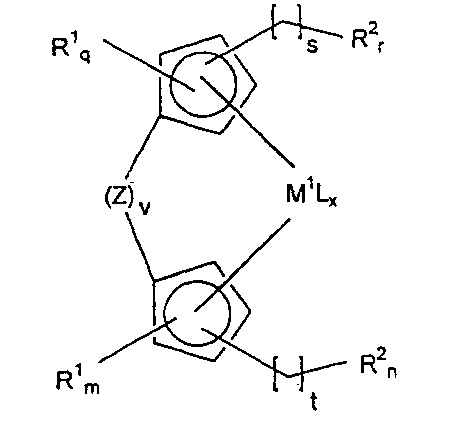
   - M¹: ein Metall der Gruppe 3, 4, 5 oder 6 des Periodensystems der Elemente sowie Lanthanide oder Actinide bedeutet,
   - R¹: gleich oder verschieden sind und ein Wasserstoffatom, eine C₁-C₃₀ kohlenstoffhaltige Gruppe wie C₁-C₂₅-Alkyl, z. B. Methyl, Ethyl, tert.-Butyl, Cyclohexyl oder Octyl, C₂-C₂₅-Alkenyl, C₃-C₁₅-Alkylalkenyl, C₆-C₂₄-Aryl, C₅-C₂₄-Heteroaryl wie Pyridyl, Furyl oder Chinolyl, C₇-C₃₀-Arylalkyl, C₇-C₃₀-Alkylaryl, C₁-C₁₂-Alkoxy, SiR³,worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
   - R2: gleich oder verschieden sind und ein fluorhaltiges C₁-C₂₅-Alkyl oder fluorhaltiges C₁-C₂₅-Alkenyl bedeuten,
   - r, n: gleich oder verschieden sind und 1, 2, 3, 4 oder 5 bedeuten,
   - m, q: gleich oder verschieden sind und 0, 1, 2, 3 oder 4 bedeuten,
   - q+r: gleich 5 für v = 0, und q+r gleich 4 für v = 1 ist,
   - m+n: gleich 5 für v = 0, und m+n gleich 4 für v = 1 ist,
   - s, t: gleich oder verschieden sind und eine ganze Zahl von 1 bis 20 bedeuten,
   - L: gleich oder verschieden sind und ein Halogenatom oder einen kohlenwasserstoffhaltigen Rest mit 1-20 Kohlenstoffatomen bedeuten, z. B. C₁-C₂₀-Alkyl, C₂-C₂₀-Alkenyl, C₁-C₂₀-Alkoxy, C₆-C₁₄-Aryloxy oder C₆-C₄₀-Aryl,
   - x: eine ganze Zahl von 1 bis 4 ist, wobei im Falle von M¹ = Ti, Zr oder Hf x bevorzugt gleich 2 ist,
   - Z ein: verbrückendes Strukturelement zwischen den beiden Cyclopentadienylringen bezeichnet, und v ist 0 oder 1, bedeutet, sowie gegebenenfalls
(c) mindestens einen Träger.

Besonders bevorzugt bedeutet Z eine Gruppe M²R⁴R⁵, worin M² Kohlenstoff, Silizium, Germanium oder Zinn ist und R⁴ und R⁵ gleich oder verschieden eine C₁-C₂₀-Kohlenwasserstoffgruppe wie C₁-C₁₀-Alkyl oder C₆-C₁₄-Aryl bedeuten. Bevorzugt ist Z gleich CH₂, CH₂CH₂, CH(CH₃)CH₂, CH(C₄H₉)C(CH₃)₂, C(CH₃)₂, (CH₃)₂Si, (CH₃CH₂)₂Si, (CH₃)((CH₃)₃C)Si,(CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂.
Z kann auch mit einem oder mehreren Resten R¹ und/oder R² ein mono- oder polycyclisches Ringsystem bilden.

Bevorzugt sind chirale verbrückte Metallocene der Formel I insbesondere solche in denen v gleich 1 ist und einer oder beide Cyclopentadienylringe so substituiert sind, daß sie einen Indenylring darstellen. Der Indenylring ist bevorzugt substituiert, insbesondere in 2-, 4-, 2,4,5-, 2,4,6-, 2,4,7 oder 2,4,5,6-Stellung, mit C₁-C₂₀kohlenstoffhaltigen Gruppen, wie C₁-C₁₀-Alkyl oder C₆-C₂₀-Aryl, wobei auch zwei oder mehrere Substituenten des Indenylrings zusammen ein Ringsystem bilden können.

Besonders bevorzugt sind in Formel (I)
- M¹: ein Metall der Gruppe 4 des Periodensystems der Elemente wie Ti, Zr, oder Hf,
- R¹: gleich oder verschieden sind und ein Wasserstoffatom, eine C₁-C₃₀ - kohlenstoffhaltige Gruppe wie C₁-C₂₅-Alkyl, insbesondere Methyl, Ethyl, tert.-Butyl, Cyclohexyl oder Octyl, C₂-C₂₅-Alkenyl, C₃-C₁₅-Alkylalkenyl, C₆-C₂₄- Aryl, C₅-C₂₄-Heteroaryl wie Pyridyl, Furyl oder Chinolyl, C₇-C₃₀-Arylalkyl, C₇-C₃₀-Alkylaryl, oder C₁-C₁₂-Alkoxy ist, SiR³,worin R³ gleich oder verschieden ein Wasserstoffatom oder eine C₁-C₄₀-kohlenstoffhaltige Gruppe wie C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀₋Alkylaryl oder C₈-C₄₀-Arylalkenyl sind, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
- R²: gleich oder verschieden sind und ein fluorhaltiges C₁-C₂₅-Alkyl oder fluorhaltiges C₁-C₂₅-Alkenyl;
- r, n: gleich oder verschieden sind und 1, 2, 3, 4 oder 5 bedeuten,
- m, q: gleich oder verschieden sind und 0, 1, 2, 3 oder 4 bedeuten,
- q+r: gleich 5 für v = 0, und q+r gleich 4 für v = 1 ist,
- m+n: gleich 5 für v = 0, und m+n gleich 4 für v = 1 ist,
- s, t: gleich oder verschieden sind und eine ganze Zahl von 1 bis 20 bedeuten,
- L: gleich oder verschieden sind und ein Halogenatom oder einen kohlenwasserstoffhaltigen Rest mit 1-20 Kohlenstoffatomen bedeuten, insbesondere C₁-C₂₀-Alkyl, C₂-C₂₀-Alkenyl, C₁-C₂₀-Alkaxy, C₆-C₁₄-Aryloxy oder C₆-C₄₀-Aryl,
- x: eine ganze Zahl von 1 bis 4 ist, wobei im Falle von M¹ = Ti, Zr oder Hf x bevorzugt gleich 2 ist,
- Z: ein verbrückendes Strukturelement zwischen den beiden Cyclopentadienylringen bezeichnet, und v ist 0 oder 1.

Exemplare aber nicht limitierende Beispiele für die erfindungsgemäße metallorganische Verbindung sind:
Bis(η⁵-2', 2', 2', -trifluorethyl)cyclopentadienyl)titandichlorid
Bis(η⁵-1'H, 1'H, 2'H, 2'H-perfluoroctylcyclopentadienyl)titandichlorid
Bis(η⁵-1'H, 1'H, 2'H, 2'H-perfluorhexylcyclopentadienyl)titandichlorid
Bis(η⁵-3'-(trifluormethyl)-3', 4', 4', 4'-tetrafluorbutylcyclopentadienyl)titandichlorid
Bis(η⁵-2', 2', 2', -trifluorethyl)cyclopentadienyl)zirconiumdichlorid
Bis(η⁵-1'H, 1'H, 2'H, 2'H-perfluoroctylcyclopentadienyl)zirconiumdichlorid
Bis(η⁵-1'H, 1'H, 2'H, 2'H-perfluorhexylcyclopentadienyl)zirconiumdichlorid
Bis(η⁵-3'-(trifluormethyl)-3', 4', 4', 4'-tetrafluorbutylcyclopentadienyl)zirconiumdichlorid
Bis(η⁵-2', 2', 2', -trifluorethyl)cyclopentadienyl)hafniumdichlorid
Bis(η⁵-1'H, 1'H, 2'H, 2'H-perfluoroctylcyclopentadienyl)hafniumdichlorid
Bis(η⁵-1'H, 1'H, 2'H, 2'H-perfluorhexylcyclopentadienyl)hafniumdichlorid
Bis(η⁵-3'-(trifluormethyl)-3', 4', 4', 4'-tetrafluorbutylcyclopentadienyl)-hafniumdichlorid
(η⁵-2', 2', 2', -Trifluorethyl)cyclopentadienyl)(η⁵-cyclopentadienyl)titandichlorid
(η⁵-1'H, 1'H, 2'H, 2'H-Perfluoroctylcyclopentadienyl) (η⁵-cyclopentadienyl)-titandichlorid
(η⁵-1'H, 1'H, 2'H, 2'H-Perfluorhexylcyclopentadienyl) (η⁵-cyclopentadienyl)-titandichlorid
(η⁵-3'-(Trifluormethyl)-3', 4', 4', 4'-tetrafluorbutylcyclopentadienyl)(η⁵-cyclopentadienyl)titandichlorid
(η⁵-2', 2', 2', -Trifluorethyl)cyclopentadienyl)(η⁵-cyclopentadienyl)-zirconiumdichlorid
(η⁵-1'H, 1'H, 2'H, 2'H-Perfluoroctylcyclopentadienyl)(η⁵-cyclopentadienyl)-zirconiumdichlorid
(η⁵-1'H, 1'H, 2'H, 2'H-Perfluorhexylcyclopentadienyl)(η⁵-cyclopentadienyl)-zirconiumdichlorid
(η⁵-3'-(Trifluormethyl)-3', 4', 4', 4'-tetrafluorbutylcyclopentadienyl)(η⁵-cyclopentadienyl)zirconiumdichlorid
(η⁵-2', 2', 2', -Trifluorethyl)cyclopentadienyl)(η⁵-cyclopentadienyl)hafniumdichlorid
(η⁵-1'H, 1'H, 2'H, 2'H-Perfluoroctylcyclopentadienyl)(η⁵-cyclopentadienyl)-hafniumdichlorid
(η⁵-1'H, 1'H, 2'H, 2'H-Perfluorhexylcyclopentadienyl)(η⁵-cyclopentadienyl)-hafniumdichlorid
(η⁵-3'-(Trifluormethyl)-3',4',4',4'-tetrafluorbutylcyclopentadienyl)(η⁵-cyclopentadienyl)hafniumdichlorid
(η⁵-2', 2', 2', -Trifluorethyl)cyclopentadienyl)(η⁵-pentamethylcyclopentadienyl)-titandichlorid
(η⁵-1'H, 1'H, 2'H, 2'H-Perfluoroctylcyclopentadienyl)(η⁵-pentamethylcyclopentadienyl)titandichlorid
(η⁵-2', 2', 2', -Trifluorethyl)cyclopentadienyl)(η⁵pentamethylcyclopentadienyl)-zirconiumdichlorid
(η⁵-1'H, 1'H, 2'H, 2'H-Perfluoroctylcyclopentadienyl)(η⁵-pentamethylcyclopentadienyl)zirconiumdichlorid
(η⁵-2', 2', 2', -Trifluorethyl)cyclopentadienyl)(η⁵-pentamethylcyclopentadienyl)-hafniumdichlorid
(η⁵-1'H, 1'H, 2'H, 2'H-Perfluoroctylcyclopentadienyl)(η⁵-pentamethylcyclopentadienyl)hafniumdichlorid
(η⁵-2', 2', 2', -Trifluorethyl)cyclopentadienyl)(η⁵-methylcyclopentadienyl)-titandichlorid
(η⁵-1'H, 1'H, 2'H, 2'H-Perfluoroctylcyclopentadienyl)(η⁵-methylcyclopentadienyl)-titandichlorid
(η⁵-2', 2', 2', Trifluorethyl)cyclopentadienyl)(η⁵-methylcyclopentadienyl)-zirconiumdichlorid
(η⁵-1'H, 1'H, 2'H, 2'H-Perfluoroctylcyclopentadienyl)(η⁵-methylcyclopentadienyl)-zirconiumdichlorid
(η⁵-2', 2', 2', -Trifluorethyl)cyclopentadienyl) (η⁵-methylcyclopentadienyl)-hafniumdichlorid
(η⁵-1'H, 1'H, 2'H, 2'H-Perfluoroctylcyclopentadienyl)(η⁵-methylcyclopentadienyl)-hafniumdichlorid
Dimethylsilandiyl(η⁵-3-(2', 2', 2', -trifluorethyl)cyclopentadieny)(η⁵-3-methylcyclopentadienyl)titandichlorid
Dimethylsilandiyl(η⁵-3-(1'H, 1'H, 2'H, 2'H-perfluoroctyl)cyclopentadienyl)(η⁵-3-methylcyclopentadienyl)titandichlorid
Dimethylsilandiyl(η⁵-3-(2', 2', 2', -trifluorethyl)cyclopentadienyl)(η⁵-3-methylcyclopentadienyl)zirconiumdichlorid
Dimethylsilandiyl(η⁵-3-(1'H, 1'H, 2'H, 2'H-perfluoroctyl)cyclopentadienyl)(η⁵-3-methylcyclopentadienyl)zirconiumdichlorid
Dimethylsilandiyl(η⁵-3-(2', 2', 2', -trifluorethyl)cyclopentadieny)(η⁵-3-methylcyclopentadienyl)hafniumdichlorid
Dimethylsilandiyl(η⁵-3-(1'H, 1'H, 2'H, 2'H-perfluoroctyl)cyclopentadienyl)(η⁵-3-methylcyclopentadienyl)hafniumdichlorid
Dimethylsilandiyl(η⁵-3-(2', 2', 2', -trifluorethyl)cyclopentadienyl)(η⁵-cyclopentadienyl)titandichlorid
Dimethylsilandiyl(η⁵-3-(1'H, 1'H, 2'H, 2'H-perfluoroctyl)cyclopentadienyl)(η⁵-cyclopentadienyl)titandichlorid
Dimethylsilandiyl(η⁵-3-(2', 2', 2', -trifluorethyl)cyclopentadienyl)(η⁵-cyclopentadienyl)zirconiumdichlorid
Dimethylsilandiyl(η⁵-3-(1'H, 1'H, 2'H, 2'H-perfluoroctyl)cyclopentadienyl)(η⁵-cyclopentadienyl)zirconiumdichlorid
Dimethylsilandiyl(η⁵-3-(2, 2', 2', -trifluorethyl)cyclopentadienyl(η⁵-cyclopentadienyl)hafniumdichlorid
Dimethylsilandiyl(η⁵-3-(1'H, 1'H, 2'H, 2'H-perfluoroctyl)cyclopentadienyl)(η⁵-cyclopentadienyl)hafniumdichlorid#
1,2-Ethandiyl(η⁵-3-(2', 2', 2', -trifluorethyl)cyclopentadienyl)(η⁵-3-methylcyclopentadienyl)titandichlorid
1,2-Ethandiyl(η⁵-3-(1'H, 1'H, 2'H, 2'H-perfluoroctyl)cyclopentadienyl)(η⁵-3-butylcyclopentadienyl)titandichlorid
1,2-Ethandiyl(η⁵-3-(2', 2', 2', -trifluorethyl)cyclopentadienyl)(η⁵-3-butylcyclopentadienyl)zirconiumdichlorid
1,2-Ethandiyl(η⁵-3-(1'H, 1'H, 2'H, 2'H-perfluoroctyl)cyclopentadienyl)(η⁵-3-butylcyclopentadienyl)zirconiumdichlorid
1,2-Ethandiyl(η⁵-3-(2', 2', 2', -trifluorethyl)cyclopentadienyl)(η⁵-3-butylcyclopentadienyl)hafniumdichlorid
1,2-Ethandiyl(η⁵-3-(1'H, 1'H, 2'H, 2'H-perfluoroctyl)cyclopentadienyl)(η⁵-3-butylcyclopentadienyl)hafniumdichlorid
1,2-Ethandiyl(η⁵-3-(2', 2', 2', -trifluorethyl)cyclopentadienyl)(η⁵-3-methylcyclopentadienyl)titandichlorid
1,2-Ethandiyl(η⁵-3-(1'H, 1'H, 2'H, 2'H-perfluoroctyl)cyclopentadienyl)(η⁵-3-methylcyclopentadienyl)titandichlorid
1,2-Ethandiyl(η⁵-3-(2', 2', 2', -trifluorethyl)cyclopentadienyl)(η⁵-3-methylcyclopentadienyl)zirconiumdichlorid
1,2-Ethandiyl(η⁵-3-(1'H, 1'H, 2'H, 2'H-perfluoroctyl)cyclopentadienyl)(η⁵-3-methylcyclopentadienyl)zirconiumdichlorid
1,2-Ethandiyl(η⁵-3-(2', 2', 2', -trifluorethyl)cyclopentadienyl)(η⁵-3-methylcyclopentadienyl)hafniumdichlorid
1,2-Ethandiyl(η⁵-3-(1'H, 1'H, 2'H, 2'H-perfluoroctyl)cyclopentadienyl)(η⁵-3-methylcyclopentadienyl)hafniumdichlorid
1,2-Ethandiyl(η⁵-3-(2', 2', 2', -trifluorethyl)cyclopentadienyl)(η⁵-cyclopentadienyl)-titandichlorid
1,2-Ethandiyl(η⁵-3-(1'H, 1'H, 2'H, 2'H-perfluoroctyl)cyclopentadienyl)(η⁵-cyclopentadienyl)titandichlorid
1,2-Ethandiyl(η⁵-3-(2', 2', 2', -trifluorethyl)cyclopentadienyl)(η⁵-cyclopentadienyl)-zirconiumdichlorid
1,2-Ethandiyl(η⁵-3-(1'H, 1'H, 2'H, 2'H-perfluoroctyl)cyclopentadienyl)(η⁵-cyclopentadienyl)zirconiumdichlorid
1,2-Ethandiyl(η⁵-3-(2', 2', 2', -trifluorethyl)cyclopentadienyl)(η⁵-cyclopentadienyl)-hafniumdichlorid
1,2-Ethandiyl(η⁵-3-(1'H, 1'H, 2'H, 2'H-perfluoroctyl)cyclopentadienyl)(η⁵-cyclopentadienyl)hafniumdichlorid
1,2-Ethandiyl(η⁵-3-(2', 2', 2', -trifluorethyl)cyclopentadienyl)(η⁵-3-methyl-cyclopentadienyl)titandichlorid
1,2-Ethandiyl(η⁵-3-(1'H, 1'H, 2'H, 2'H-perfluoroctyl)cyclopentadienyl)(η⁵-3-butylcyclopentadienyl)titandichlorid
1,2-Ethandiyl(η⁵-3-(2', 2', 2', -trifluorethyl)cyclopentadienyl)(η⁵-3-butylcyclopentadienyl)zirconiumdichlorid
1,2-Ethandiyl(η⁵-3-(1'H, 1'H, 2'H, 2'H-perfluoroctyl)cyclopentadienyl)(η⁵-3-butylcyclopentadienyl)zirconiumdichlorid
1,2-Ethandiyl(η⁵- 3-(2', 2', 2', -trifluorethyl)cyclopentadienyl)(η⁵-3-buty)-cyclopentadienyl)hafniumdichlorid
1,2-Ethandiyl(η⁵-3-(1'H, 1'H, 2'H, 2'H-perfluoroctyl)cyclopentadienyl)(η⁵-3-butylcyclopentadienyl)hafniumdichlorid
Dimethylsilandiylbis(η⁵-3-(2', 2', 2', -trifluorethyl)cyclopentadienyl)-zirconiumdichlorid
Dimethylsilandiylbis(η⁵-3-(2', 2', 2', -trifluorethyl)cyclopentadienyl)titandichlorid
Dimethylsilandiylbis(η⁵-3-(1'H, 1'H, 2'H, 2'H-perfluoroctyl)cyclopentadienyl)-titandichlorid
Dimethylsilandiylbis(η⁵-3-(1'H, 1'H, 2'H, 2'H-perfluoroctyl)cyclopentadienyl)-zirconiumdichlorid
Dimethylsilandiylbis(η⁵-3-(2', 2', 2', -trifluorethyl)cyclopentadienyl)hafniumdichlorid
Dimethylsilandiylbis(η⁵-3-(1'H, 1'H, 2'H, 2'H-perfluoroctyl)cyclopentadienyl)-hafniumdichlorid
(η⁵-2', 2', 2', -Trifluorethyl)cyclopentadienyl)(η⁵-butylcyclopentadienyl)titandichlorid
(η⁵-1'H, 1'H, 2'H, 2'H-Perfluoroctylcyclopentadienyl) (η⁵-butylcyclopentadienyl)-titandichlorid
(η⁵-1'H, 1'H, 2'H, 2'H-Perfluorhexylcyclopentadienyl) (η⁵-butylcyclopentadienyl)-titandichlorid
(η⁵-3'-(Trifluormethyl)-3', 4', 4', 4'-tetrafluorbutylcyclopentadienyl)(η⁵-butylcyclopentadienyl)titandichlorid
(η⁵-2', 2', 2', -Trifluorethyl)cyclopentadienyl)(η⁵-butylcyclopentadienyl)-zirconiumdichlorid
(η⁵-1'H, 1'H, 2'H, 2'H-Perfluoroctylcyclopentadienyl)(η⁵-butylcyclopentadienyl)-zirconiumdichlorid
(η⁵-1'H, 1'H, 2'H, 2'H-Perfluorhexylcyclopentadienyl)( η⁵-butylcyclopentadienyl)-zirconiumdichlorid
(η⁵-3'-(Trifluormethyl)-3', 4', 4', 4'-tetrafluorbutylcyclopentadienyl)(η⁵-butylcyclopentadienyl)zirconiumdichlorid
(η⁵-2', 2', 2', -Trifluorethyl)cyclopentadienyl)(η⁵-butylcyclopentadienyl)-hafniumdichlorid
(η⁵-1'H, 1'H, 2'H, 2'H-Perfluoroctylcyclopentadienyl)(η⁵-butylcyclopentadienyl)-hafniumdichlorid
(η⁵-1'H, 1'H, 2'H, 2'H-Perfluorhexylcyclopentadienyl)(η⁵-butylcyclopentadienyl)-hafniumdichlorid
(η⁵-3'-(Trifluormethyl)-3',4',4',4'-tetrafluorbutylcyclopentadienyl)(η⁵-butylcyclopentadienyl)hafniumdichlorid
Dimethylsilandiyl-bis-(η⁵-2-(2', 2', 2', -trifluorethyl)benzoindenyl)zirkoniumdichlorid
Dimethylsilandiyl-bis-(η⁵-2-(2', 2', 2', -trifluorethyl)indenyl)zirkoniumdichlorid
Dimethytsilandiyl-bis-(η⁵-2-(2', 2', 2', -trifluorethyl)-4-(1-naphthyl)-indenyl)-zirkoniumdichlorid
Dimethylsilandiyl-bis-(η⁵-2-(2', 2', 2', -trifluorethyl)-4-(2-naphthyl)-indenyl)-zirkoniumdichlorid
Dimethylsilandiyl-bis-(η⁵-2-(2', 2', 2', -trifluorethyl)-4-phenyl-indenyl)-zirkoniumdichlorid
Dimethylsilandiyl-bis-(η⁵-2-(2', 2', 2', -trifluorethyl)-4-phenyl-indenyl)-zirkoniumdichlorid
Dimethylsilandiy bis (η⁵-2-(2', 2', 2', -trifluorethyl)-4,5-benzo-indenyl)-zirkoniumdichlorid
Dimethylsilandiyl-bis-(η⁵-2-(2', 2', 2', -trifluorethyl)-4-(4'-tert.-butyl-phenyl)-indenyl)-zirkoniumdichlorid
Dimethylsilandiyl-bis-(η⁵-2-(1'H, 1'H, 2'H, 2'H-perfluoroctyl)benzoindenyl)-zirkoniumdichlorid
Dimethylsilandiyl-bis-(η⁵-2-(1'H, 1'H, 2'H, 2'H-perfluoroctyl)indenyl)-zirkoniumdichlorid
Dimethylsilandiyl-bis-(η⁵-2-(1'H, 1'H, 2'H, 2'H-perfluoroctyl)-4-(1-naphthyl)-indenyl)zirkoniumdichlorid
Dimethylsilandiyl-bis-(η⁵-2-(1'H, 1'H, 2'H, 2'H-perfluoroctyl)-4-(2-naphthyl)-indenyl)zirkoniumdichlorid
Dimethylsilandiyl-bis-(η⁵-2-(1'H, 1'H, 2'H, 2'H-perfluoroctyl)-4-phenyl-indenyl)-zirkoniumdichlorid
Dimethylsilandiyl-bis-(η⁵-2-(1'H, 1'H, 2'H, 2'H-perfluoroctyl)-4-phenyl-indenyl)-zirkoniumdichlorid
Dimethylsitandiy-bis-(η⁵-2-(1'H, 1'H, 2'H, 2'H-perfluoroctyl)-4,5-benzo-indenyl)-zirkoniumdichlorid
Dimethylsilandiyl-bis-(η⁵-2-(1'H, 1'H, 2'H, 2'H-perfluoroctyl)-4-(4'-tert.-butyl-phenyl)-indenyl)zirkoniumdichlorid

Neben den Dichlorid-Verbindungen sind auch die Dimethyl-Verbindungen von Bedeutung.

Die Herstellung der Verbindung nach Formel (I) erfolgt durch Umsetzung eines substituierten Cyclopentadienids (II), das aus der Umsetzung eines Metallocens mit einem fluor- und iodhaltigen Alkyl erhalten wird, mit Metallverbindung (III) und soll durch das nachfolgende Reaktionschema beispielhaft veranschaulicht werden.

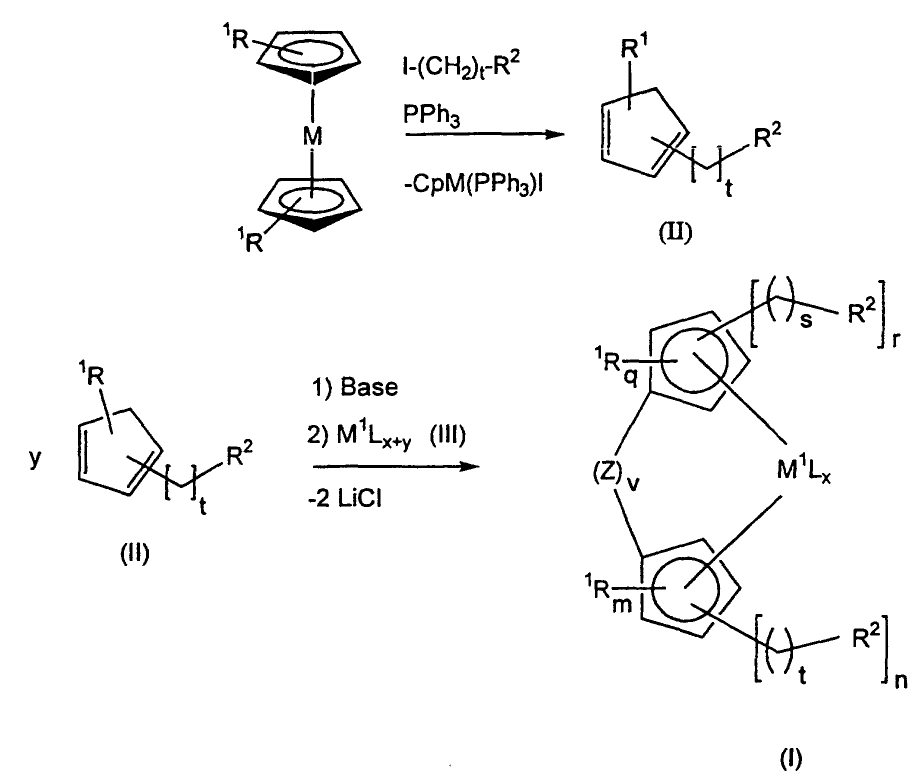

In diesem Schema haben M¹, R¹, R², L, Z, m, n, q, r, s, t, v und x die gleiche Bedeutung wie oben in Formel (I) angegeben. y ist gleich 1 oder 2 und M ist ein Metall, insbesondere bevorzugt ist Nickel. Die Base ist eine starke Base wie beispielsweise Butyllithium oder Kaliumhydrid. Die Umsetzung erfolgt bei Temperaturen von -50°C bis +150°C, bevorzugt bei 0°C bis 100°C in organischen Lösemitteln, wie z.B. Toluol, Benzol, Methylenchlorid, Tetrachlorkohlenstoff, Tetrahydrofuran, Diethylether und Benzin. Die Umsetzung dauert von 1 min bis zu 20 Tagen. Die Verbindung der Formel (I) kann isoliert oder direkt für weitere Umsetzungen eingesetzt werden. Die Verbindung der Formel (I) kann auch ohne Isolierung von Zwischen- und Endstufen in einer Eintopfreaktion hergestellt werden.

Das erfindungsgemäße Katalysatorsystem enthält neben mindestens einem Metallocen der Formel (I) zusätzlich mindestens einen Cokatalysator (Komponente a).

Die Cokatalysatorkomponente enthält ein Aluminoxan, eine Lewis-Säure oder eine ionische Verbindung, die durch Reaktion mit dem Metallocen dieses in eine kationische Verbindung überführt.

Als Aluminoxan wird bevorzugt eine Verbindung der allgemeinen Formel (IV)

(R AlO)p (IV)

verwendet. Aluminoxane können cyclisch wie in Formel (V) 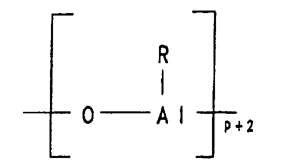 oder linear wie in Formel (VI) 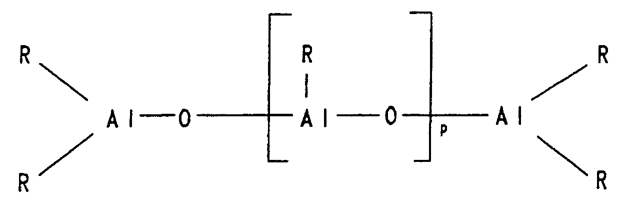 oder vom Cluster-Typ wie in Formel (VII) sein, wie sie in neuerer Literatur beschrieben werden, vgl. JACS 117 (1995), 6465-74, Organometallics 13 (1994), 2957-2969.

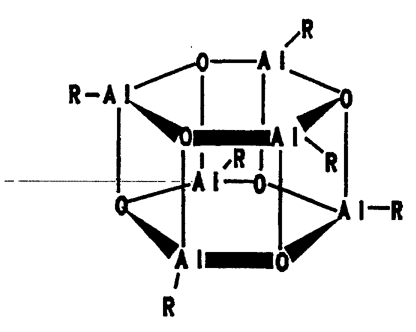

Die Reste R in den Formeln (V), (VI) und (VII) können gleich oder verschieden sein und eine C₁-C₂₀-Kohlenwasserstoffgruppe wie eine C₁-C₆-Alkylgruppe, eine C₆-C₁₈-Arylgruppe, Benzyl oder Wasserstoff bedeuten, und p eine ganze Zahl von 2 bis 50, bevorzugt 10 bis 35 bedeuten.

Bevorzugt sind die Reste R gleich und bedeuten Methyl, Isobutyl, n-Butyl, Phenyl oder Benzyl, besonders bevorzugt Methyl.

Sind die Reste R unterschiedlich, so sind sie bevorzugt Methyl und Wasserstoff, Methyl und Isobutyl oder Methyl und n-Butyl, wobei Wasserstoff oder Isobutyl oder n-Butyl bevorzugt zu 0,01 bis 40 % (Zahl der Reste R) enthalten sind.

Die Herstellung von Aluminoxan erfolgt nach Literaturvorschriften (vgl. Polyhedron 9 (1990) 429 und EP-A-302 424)

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Als Lewis-Säure werden bevorzugt mindestens eine bor- oder aluminiumorganische Verbindung eingesetzt, die C₁-C₂₀-kohlenstoffhaltige Gruppen enthalten, wie verzweigte oder unverzweigte Alkyl- oder Halogenalkyl, wie Methyl, Propyl, Isopropyl, Isobutyl, Trifluormethyl, ungesättigte Gruppen, wie Aryl oder Halogenaryl, wie Phenyl, Tolyl, Benzylgruppen, p-Fluorophenyl, 3,5-Difluorophenyl, Pentachlorophenyl, Pentafluorophenyl, 3,4,5 Trifluorophenyl und 3,5 Di(trifluoromethyl)phenyl.

Beispiele für Lewis-Säuren sind Trifluoroboran, Tris(4-fluorophenyl)boran, Tris(3,5-difluorophenyl)boran, Tris(4-fluoromethylphenyl)boran, Tris(pentafluorophenyl)boran, Tris(3,5-difluorophenyl)boran und/oder Tris(3,4,5-trifluorophenyl)boran, Di(bis(pentafluorophenyl)boroxy)methylalan, Di(bisphenylboroxy)methylalan, Di(bis(pentafluorophenyl)boroxy)isopropylalan.

Als ionische Cokatalysatoren werden bevorzugt Verbindungen eingesetzt, die ein nicht koordinierendes Anion enthalten, wie Tetrakis(pentafluorophenyl)borate, Tetraphenylborate, SbF₆-, CF₃SO₃- oder ClO₄-. Als kationisches Gegenion werden Lewis-Basen wie Metyhlamin, Anilin, Dimethylamin, Diethylamin, N-Methylanilin, Diphenylamin, N,N-Dimethylanilin, Trimethylamin, Triethylamin, Tri-n-butylamin, Methyldiphenylamin, Pyridin, p-Bromo-N,N-dimethylanilin, p-Nitro-N,N-dimethylanilin, Triethylphosphin, Triphenylphosphin, Diphenylphosphin, Tetrahydrothiophen und Triphenylcarbenium eingesetzt.

Beispiele für solche erfindungsgemäßen ionischen Verbindungen sind Tributylammoniumtetra(pentafluorophenyl)borat, Tributylammoniumtetra(pentafluorophenyl)aluminat, Tributylammoniumtetra(trifluoromethylphenyl)borat, Tributylammoniumtetra(4-fluorophenyl)borat, N,N-Dimethylaniliniumtetrakis(pentafluorophenyl)borate, N,N-Dimethylaniliniumtetrakis(pentafluorophenyl)aluminat, Di(propyl)ammoniumtetrakis(pentafluorophenyl)borat, Di(cyclohexyl)ammoniumtetrakis(pentafluorophenyl)borat, Triphenylcarbeniumtetrakis(pentafluorophenyl)borat, Triphenylcarbeniumtetrakis(pentafluorophenyl)aluminat, Ferroceniumtetrakis(pentafluorophenyl)borat und/oder Ferroceniumtetrakis(pentafluorophenyl)aluminat. Bevorzugt sind Triphenylcarbeniumtetrakis(pentafluorophenyl)borat und/oder N,N-Dimethylaniliniumtetrakis(pentafluorophenyl)borat.

Es können auch Gemische mindestens einer Lewis-Säure und mindestens einer ionischen Verbindung eingesetzt werden.

Das erfindungsgemäße Katalysatorsystem enthält zusätzlich einen Träger (Komponente c). Der Träger kann ein beliebiger organischer oder anorganischer, inerter Feststoff sein, insbesondere ein poröser Träger wie Talk, anorganische Oxide und feinteilige Polymerpulver, wie Polyolefine.

Geeignete anorganische Oxide sind beispielsweise Siliciumdioxid, Aluminiumoxid, sowie Mischoxide der beiden Elemente und entsprechende Oxid-Mischungen.

Die verwendeten Trägermaterialien weisen eine spezifische Oberfläche im Bereich von 10 m²/g bis 1000 m²/g, ein Porenvolumen im Bereich von 0,1 ml/g bis 5 ml/g und eine mittlere Partikelgröße von 1 µm bis 500 µm auf. Bevorzugt sind Träger mit einer spezifischen Oberfläche im Bereich von 50 µm bis 500 µm, einem Porenvolumen im Bereich zwischen 0,5 ml/g und 3,5 ml/g und einer mittleren Partikelgröße im Bereich von 5 µm bis 350 µm. Besonders bevorzugt sind Träger mit einer spezifischen Oberfläche im Bereich von 200 m²/g bis 400 m²/g, einem Porenvolumen im Bereich zwischen 0,8 ml/g bis 3,0 ml/g und einer mittleren Partikelgröße von 10 µm bis 200 µm.

Wenn das verwendete Trägermaterial von Natur aus einen geringen Feuchtigkeitsgehalt oder Restlösemittelgehalt aufweist, kann eine Dehydratisierung oder Trocknung vor der Verwendung unterbleiben. Ist dies nicht der Fall, wie bei dem Einsatz von Silicagel als Trägermaterial, ist eine Dehydratisierung oder Trocknung empfehlenswert. Der Gewichtsverlust beim Glühen (LOI = Loss on ignition) sollte 1 % oder weniger betragen. Die thermische Dehydratisierung oder Trocknung des Trägermaterials kann unter Vakuum und gleichzeitiger Inertgasüberlagerung, wie Stickstoff, erfolgen. Die Trocknungstemperatur liegt im Bereich zwischen 100 °C und 1000 °C, vorzugsweise zwischen 200 °C und 800 °C. Der Parameter Druck ist in diesem Fall nicht entscheidend. Die Dauer des Trocknungsprozesses kann zwischen 1 und 24 Stunden betragen. Kürzere oder längere Trocknungsdauern sind möglich, vorausgesetzt, daß unter den gewählten Bedingungen die Gleichgewichtseinstellung mit den Hydroxylgruppen auf der Trägeroberfläche erfolgen kann, was normalerweise zwischen 4 und 8 Stunden erfordert.

Eine Dehydratisierung oder Trocknung des Trägermaterials ist auch auf chemischem Wege möglich, indem das adsorbierte Wasser und die Hydroxylgruppen auf der Oberfläche mit geeigneten Modifizierungsmitteln zur Reaktion gebracht werden. Durch die Umsetzung mit dem Modifizierungsmittel können die Hydroxylgruppen vollständig oder auch teilweise in eine Form überführt werden, die zu keiner negativen Wechselwirkung mit den katalytisch aktiven Zentren führen. Geeignete Modifizierungsmittel sind beispielsweise Siliciumhalogenide und Silane, wie Siliciumtetrachlorid, Chlortrimethylsilan, Dimethylaminotrichlorsilan, Aminen wie Phenyldimethylamin, Pyridin oder metallorganische Verbindungen von Aluminium-, Bor und Magnesium wie Trimethylaluminium, Triethylaluminium, Triisobutylaluminium, Triethylboran, Dibutylmagnesium. Die chemische Dehydratisierung oder Modifizierung des Trägermaterials kann dadurch erfolgen, daß man unter Luft- und Feuchtigkeitsausschluß eine Suspension des Trägermaterials in einem geeigneten Lösemittel mit dem Modifizierungsmittel in reiner Form oder gelöst in einem geeigneten Lösemittel zur Reaktion bringt. Geeignete Lösemittel sind aliphatische oder aromatische Kohlenwasserstoffe, wie Pentan, Hexan, Heptan, Toluol oder Xylol. Die Modifizierung erfolgt bei Temperaturen zwischen 25 °C und 120 °C, bevorzugt zwischen 50 °C und 70 °C. Höhere und niedrigere Temperaturen sind möglich. Die Dauer der Reaktion beträgt zwischen 30 Minuten und 20 Stunden, bevorzugt 1 bis 5 Stunden. Nach dem vollständigen Ablauf der chemischen Dehydratisierung wird das Trägermaterial durch Filtration unter Inertbedingungen isoliert, ein- oder mehrmals mit geeigneten inerten Lösemitteln wie sie bereits zuvor beschrieben worden sind gewaschen und anschließend im Inertgasstrom oder am Vakuum getrocknet.

Organische Trägermaterialien wie feinteilige Polyolefinpulver, wie Polyethylen, Polypropylen oder Polystyrol, können auch verwendet werden und sollten ebenfalls vor dem Einsatz von anhaftender Feuchtigkeit, Lösemittelresten oder anderen Verunreinigungen durch entsprechende Reinigungs- und Trocknungsoperationen befreit werden.

Zur Darstellung des geträgerten Katalysatorsystems wird mindestens eine der oben beschriebenen Metallocenkomponenten, mindestens eine Cokatalysatorkomponente und mindestens ein Trägermaterial in einem geeigneten Lösemittel in beliebiger Reihenfolge in Kontakt gebracht. Das Lösemittel wird entfernt und das resultierende geträgerte Metallocen-Katalysatorsystem getrocknet, um sicherzustellen, daß das Lösemittel vollständig oder zum größten Teil aus den Poren des Trägermaterials entfernt wird. Der geträgerte Katalysator wird als frei fließendes Pulver erhalten.

Beispiele für geeignete Lösemittel umfassen Alkane wie Pentan, Isopentan, Hexan, Heptan, Octan, und Nonan, Cycloalkane wie Cyclopentan und Cyclohexan, und Aromaten wie Benzol, Toluol. Ethylbenzol und Diethylbenzol. Ganz besonders bevorzugt ist Toluol.

Die bei der Präparation des geträgerten Katalysatorsystems eingesetzten Mengen an Cokatalysator und Metallocen können über einen weiten Bereich variiert werden. Bevorzugt wird ein molares Verhältnis von Cokatalysator zum Übergangsmetall im Metallocen von 1 : 1 bis 1000 : 1 eingestellt, ganz besonders bevorzugt ein Verhältnis von 1 : 1 bis 400 : 1.

Das erfindungsgemäß dargestellte geträgerte Katalysatorsystem kann entweder direkt zur Polymerisation von Olefinen eingesetzt oder vor seiner Verwendung in einem Polymerisationsprozeß mit einem oder mehreren olefinischen Monomeren vorpolymerisiert werden. Die Ausführung der Vorpolymerisation von geträgerten Katalysatorsystemen ist in WO 94/28034 beschrieben.

Als Additiv kann während oder nach der Herstellung des geträgerten Katalysatorsystems eine geringe Menge eines α-Olefins, wie Styrol, als aktivitätssteigernde Komponente oder eines Antistatikums, wie in US Serial No. 08/365280 beschrieben, zugesetzt werden.

Zudem wird ein Verfahren zur Herstellung von Polyolefinen durch Polymerisation von Olefinen in Gegenwart des erfindungsgemäßen Katalysators beschrieben. Die Polymerisation kann eine Homo- oder eine Copolymerisation sein.

Polyolefine in Sinne der vorliegenden Erfindung sind Polymerisate auf Basis von Olefinen der Formel R^{α}-CH=CH-R^{β}, worin R^{α} und R^{β} gleich oder verschieden sind und ein Wasserstoffatom, ein Halogenatom, eine Alkoxy-, Hydroxy-, Alkylhydroxy-, Aldehyd, Carbonyl-, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonyl-, Carbonsäure- oder Carbonsäureestergruppe substituiert sein kann, oder R^{α} und R^{β} mit den sie verbindenden Atomen einen oder mehrere Ringe bilden.

Beispiele für solche Olefine sind 1-Olefine wie Ethen, Propylen, 1-Buten, 1-Penten, 1-Hexen, 4-Methyl-1-penten oder 1-Octen, Styrol, Diene wie 1,3-Butadien, 1,4-Hexadien, Vinylnorbornen, Norbomadien, Ethylnorbornadien und cyclische Olefine wie Norbornen, Tetracyclododecen oder Methylnorbornen.
Darüber hinaus können auch Gemische der vorstehenden Olefine copolymerisiert werden. Insbesondere wird Propylen homo- oder copolymerisiert.

Die Polymerisation wird bevorzugt bei einer Temperatur von -60 bis 300°C, besonders bevorzugt 30 bis 250°C, durchgeführt. Der Druck beträgt 0,5 bis 2500 bar, bevorzugt 2 bis 1500 bar.

Die Polymerisation kann kontinuierlich oder diskontinuierlich, ein- oder mehrstufig, in Lösung, in Suspension, in der Gasphase oder in einem überkritischem Medium durchgeführt werden.

Das geträgerte System kann als Pulver oder noch Lösemittel behaftet wieder resuspendiert und als Suspension in einem inerten Suspensionsmittel in das Polymerisationssystem eindosiert werden.

Mit Hilfe des erfindungsgemäßen Katalysators kann eine Vorpolymerisation erfolgen. Zur Vorpolymerisation wird bevorzugt das in der Polymerisation eingesetzte Propylen verwendet.

Zur Herstellung von Polypropylen mit breiter Molekulargewichtsverteilung werden bevorzugt Katalysatorsysteme verwendet, die zwei oder mehr verschiedene Metallocene enthalten.

Zur Entfernung von im Olefin vorhandenen Katalysatorgiften ist eine Reinigung mit einem Aluminiumalkyl, beispielsweise Trimethylaluminium, Triethylaluminium oder Triisobutylaluminium vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder getrennt.
Als Molmassenregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.
Dabei wird die erfindungsgemäße Verbindung in einer Konzentration, bezogen auf das Übergangsmetall von bevorzugt 10⁻³ bis 10⁻⁸, vorzugsweise 10⁻⁴ bis 10⁻⁷ mol Übergangsmetall pro dm³ Lösemittel bzw. pro dm³ Reaktorvolumen angewendet.

Vor Zugabe des Katalysatorsystems (enthaltend mindestens ein erfindungsgemäßes Metallocen) kann zusätzlich eine andere Alkylaluminiumverbindung wie beispielsweise Trimethylaluminium, Triethylaluminium, Triisobutylaluminium, Trioctylaluminium oder Isoprenylaluminium zur Inertisierung des Polymerisationssystems (beispielsweise zur Abtrennung vorhandener Katalysatorgifte im Olefin) in den Reaktor oder zum Katalysatorsystem gegeben werden. Diese wird in einer Konzentration von 100 bis 0,01 mmol Al pro kg Reaktorinhalt dem Polymerisationssystem zugesetzt. Bevorzugt werden Triisobutylaluminium und Triethylaluminium in einer Konzentration von 10 bis 01 mmol Al pro kg Reaktorinhalt eingesetzt. Dadurch kann bei der Synthese eines geträgerten Katalysatorsystems das molare Al/M-Verhältnis klein gewählt werden.

### Beispiel 1

### Synthese von Bis (2',2',2'-trifluorethyl)cyclopentadienyl)titandichlorid

### Synthese von Nickelocen

29.4 g Nickelpulver werden in 400 ml Dimethoxyethan suspendiert und unter Rühren mit 27.3 ml Brom versetzt. Man läßt 1 Stunde (h) rühren und entfernt das Lösemittel im Ölpumpenvakuum. Der erhaltene braune Rückstand wird unter Eiskühlung mit 400 ml Diethylamin aufgenommen und mit 98 ml frisch destilliertem Cyclopentadien versetzt. Die Suspension färbt sich grün. Nach 12 h Rühren bei Raumtemperatur werden Lösemittelreste im Ölpumpenvakuum entfernt und das Produkt mittels Soxhlet-Extraktion mit 700 ml Petrolether isoliert.
Ausbeute: 74g (78%)
Schmelzpunkt: 173.0 °C

### Synthese von 2',2',2'-Trifluorcyclopentadien

6,87 g Nickelocen und 9.51 g Triphenylphosphin werden in 60 ml Diethylether gelöst und mit 3,56 ml 2,2,2-Trifluorethyliodid versetzt. Die Lösung färbt sich violett und wird 48 h gerührt. Danach kondensiert man den Inhalt des Schlenkgefäßes in eine auf -196°C gekühlte Vorlage und destilliert aus dieser solange den Diethylether bei einer Badtemperatur von 45°C ab, bis die Temperatur des Destillats nicht mehr bei 35°C liegt und bestimmt mittels ¹H-NMR den Anteil an verbliebenem Diethylether (1.95 eq).
Ausbeute: 8.95 g (81%).

¹H-NMR: ([D]-Chloroform; 200.1 MHz; 300 K): d = 6.46 (m, 6H, =CH); 3.15 (m, 4H, CH₂); 3.00 (m, 4H, CH₂ (Ring), (Das Produkt besteht aus zwei Doppelbindungsisomeren)) ppm.
(Zusätzlich treten die Resonanzen des enthaltenen Diethylethers auf: 3.45 (q); 1.18 (t) ppm).
¹⁹F-NMR: ([D]-Chloroform; 282,4 MHz; 300K): d = -65,7 (t, ³J_{HF}= 11.4Hz); -65.9 (t, ³J_{HF} = 11.5 Hz) ppm.

### Synthese von Bis (2',2',2'-trifluorethyl)cyclopentadienyl)titandichlorid

14.6 mmol 2',2',2'-Trifluorethylcyclopentadien werden in Tetrahydrofuran bei -78°C mit 8.8 ml 1.65M Butyllithium-Lösung versetzt. Parallel dazu werden 0.72 ml Titantetrachlorid in 50 ml Toluol gelöst und bei -78°C langsam mit 40 ml Tetrahydrofuran versetzt. Die erhaltene Suspension wird bei -78°C zu obiger Lösung gegeben. Man läßt langsam auf Raumtemperatur erwärmen, entfernt das Lösemittel im Ölpumpenvakuum und extrahiert das Produkt mit Methylenchlorid aus dem Rückstand.
Ausbeute: 1g (37%)

¹H-NMR: ([D₆]-Benzol; 200.1 MHz; 300 K): d = 5.91 (pt, 4H, RCpH); 5.28 (pt, 4H, RCpH); 3.52 (q, ³J_{FH} = 11.0 Hz, 4H, 1'-H) ppm.
¹⁹F-NMR: ([D₆]-Benzol; 284.1 MHz; 300K): d = -65.17 (s (1H-entkoppelt)); (t,
³J_{HF}=11.5Hz) (nicht entkoppelt)) ppm.

### Beispiel 2

### Synthese von Bis (2',2',2'-trifluorethyl)cyclopentadienyl)zirconiumdichlorid

11.7 mmol 2',2',2'-Trifluorethylcyclopentadien aus Beispiel 1 werden in 80 ml Tetrahydrofuran bei -78°C mit 7.1 ml 1.65M Butyllithium-Lösung in Hexan versetzt. Zu der erhaltenen Lösung gibt man bei -78°C 2.22g Zirconiumtetrachlorid-THF-Addukt, gelöst in 30 ml Tetrahydrofuran. Man läßt langsam auf Raumtemperatur erwärmen, entfernt das Lösemittel im Ölpumpenvakuum und extrahiert das Produkt mit Methylenchlorid aus dem Rückstand. Ausbeute: 1.89 g (70%)
¹H-NMR: ([D₆]-Benzol; 300.1 MHz; 300 K): d = 5.82 (pt, 4H, RCpH); 5.39 (pt, 4H, RCpH): 3.24 (q, ³J_{FH} = 12.5 Hz, 4H, 1'-H) ppm.
¹⁹F-NMR: ([D₆]-Benzol; 284.1 MHz; 300K): d = -65.14 (s (¹H-entkoppelt)); (t,
³J_{HF}=11.5Hz) (nicht entkoppelt)) ppm.

### Beispiel 3(Vergleich)

### Synthese von (2',2',2'-trifluorethyl)cyclopentadienyl)(cyclopentadienyl)-zirconiumdichlorid

1.8 mmol 2',2',2'-Trifluorethylcyclopentadien aus Beispiel 1 werden in Tetrahydrofuran bei -78°C mit 1.05 ml 1.65M Butyllithium-Lösung versetzt. Dazu gibt man eine gekühlte Suspension von 0,46 g Cyclopentadienylzirconiumtrichlorid in 50 ml Tetrahydrofuran. Man läßt langsam auf Raumtemperatur erwärmen, entfernt das Lösemittel im Ölpumpenvakuum und extrahiert das Produkt mit Methylenchlorid aus dem Rückstand. Ausbeute: 0. 47 g (70%)

¹H-NMR: ([D]-Chloroform; 200.1 MHz; 300 K): d = 6.49 (s, 5H, CpH); 6.38 (m, 4H, RCpH); 3.46 (q, ³J_{FH} = 10.8 Hz, 2H, 1'-H) ppm.
¹⁹F-NMR: ([D]-Chloroform; 282.4 MHz; 300K): d = -66.03 (s (¹H-entkoppelt)); (t,
³J_{HF}=11.5Hz) (nicht entkoppelt)) ppm.

### Beispiel 4

### Synthese von Bis (2',2',2'-trifluorethyl)cyclopentadienyl)hafniumdichlorid

5.18 mmol 2',2',2'-Trifluorethylcyclopentadien aus Beispiel 1 werden bei -78°C mit 3.14 ml 1.65M Butyllithium-Lösung in Hexan versetzt. Zu der erhaltenen Lösung gibt man bei -78°C 0,8 g Hafniumtetrachlorid. Man läßt langsam auf Raumtemperatur erwärmen, entfernt das Lösemittel im Ölpumpenvakuum und extrahiert das Produkt mit Methylenchlorid aus dem Rückstand. Ausbeute: 1.79 g (64%)
¹H-NMR: ([D₆]-Benzol; 300.1 MHz; 300 K): d = 5.73 (pt, 4H, RCpH); 5.31 (pt, 4H, RCpH); 3.24 (q, ³J_{FH} = 10.8 Hz, 4H, 1'-H) ppm.
¹⁹F-NMR: ([D₆]-Benzol; 282.4 MHz; 300K): d = -65.8 (s (¹H-entkoppelt)); (t,
³J_{HF}=11.5Hz) (nicht entkoppelt)) ppm.

### Beispiel 5

### Synthese von Bis((1'H, 1'H, 2'H, 2'H-perfluoroctyl)cyctopentadienyl)titandichlorid

### Synthese von 1'H, 1'H, 2'H, 2'H-Perfluoroctylcyclopentadien

2.29 g Nickelocen aus Beispiel 1 und 3.17 g Triphenylphosphin werden in 5 ml Diethylether gelöst und mit 3.0 ml 1H, 1H, 2H, 2H-Perfluoroctyliodid versetzt. Die Lösung färbt sich violett und wird 48 h gerührt. Anschließend wird die überstehende Lösung filtriert, der Niederschlag sorgfältig nachgewaschen und dann das Lösemittel entfernt. Der Rückstand wird mit Pentan über eine kurze Säule chromatographiert und das Lösemittel im Ölpumpenvakuum entfernt.
Ausbeute: 3.67 g (74%)

¹H-NMR: ([D]-Chloroform; 200.1 MHz; 300 K): d = 6.45; 6.39; 6.28; 6.22; 6.05 (je m, 3H, RCpH); 2.97 (pq, (1-Isomer), 2.91 (psext, (2-Isomer), zusammen 4 H, CH2); 2.67 (m, 4H, 1'-H); 2.31 (m, 4H, 2'-H) ppm.
¹⁹F-NMR: ([D]-Chloroform; 282,4 MHz; 300K): d = -81.24 (m, 3F, 8'-F); -114.77 (m, 2F, 3'-F); -122.07 (m, 2F, 4'-F); -123.06 (m, 2F, 7'-F); -123.67 (m, 2F, 6'-F) -126.37 (m, 2F, 5'F) ppm.

### Synthese von Bis((1'H, 1'H, 2'H, 2'H-perfluoroctyl)cyclopentadienyl)titandichlorid

Eine Lösung von 0,75 g 1'H, 1'H, 2'H, 2'H-Perfluoroctylcyclopentadien in 40 ml Tetrahydrofuran wird bei -78°C mit 1.04 ml 1.65M Butyllithium-Lösung versetzt und mit einer gekühlten Suspension von 0,168 g Titantetrachlorid-THF-Addukt in 45 ml Tetrahydrofuran versetzt. Man läßt auf Raumtemperatur erwärmen und entfernt das Lösemittel im Vakuum. Das Produkt wird mittels Extraktion mit Methylenchlorid isoliert.
Ausbeute: 0,1 g (12%)

¹H-NMR: ([D]-Chloroform; 200.1 MHz; 300K): d = 6.39 (pt, 4H, RCpH); 6.28 (pt, 4H, RCpH); 3.12 (m, 4H, 1'-H); 2.48 (m, 4H, 2'-H) ppm.
¹⁹F-NMR: ([D]-Chloroform; 282.4 MHz; 300K): d = -81.0 (m, 6F, 8'-F); -114.3 (m, 4F, 3'-F); -122.1 (m, 4F, 4'-F); -123.1 (m, 4F, 7'-F); -123.6 (m, 4F, 6'-F); -126.3 (m, 4F, 5'-F) ppm.

### Beispiel 6

### Synthese von Bis((1'H, 1'H, 2'H, 2'H-perfluoroctyl)cyclopentadienyl)-zirconiumdichlorid

Eine Lösung von 0,98 g 1'H, 1'H, 2'H, 2'H-Perfluoroctylcyclopentadien aus Beispiel 5 in 60 ml Tetrahydrofuran wird bei -78°C mit 1.49 ml 1.65M Butyllithium-Lösung versetzt und mit einer gekühlten Suspension von 0,426 g Zirconiumtetrachlorid-THF-Addukt in 40 ml Tetrahydrofuran versetzt. Man läßt auf Raumtemperatur erwärmen und entfernt das Lösemittel im Vakuum. Das Produkt wird mittels Extraktion mit Methylenchlorid isoliert.
Ausbeute: 0,56 g (50%)

¹H-NMR: ([D]-Chloroform; 200.1 MHz; 300 K): d = 6.33 (pt, 4H, RCpH); 6.24 (pt, 4H, RCpH); 2.98 (m, 4H, 1'-H); 2.09 (m, 4H, 2'-H) ppm.
19F-NMR: ([D]-Chloroform; 282.4 MHz; 300K): d = -81.0 (m, 6F, 8'-F); -114.5 (m, 4F, 3'-F); -122.0 (m, 4F, 4'-F); -123.0 (m, 4F, 7'-F); -123.6 (m, 4F, 6'-F); -126.3 (m, 4F, 5'-F) ppm.

### Beispiel 7

### Synthese von Bis((1'H, 1'H, 2'H, 2'H-perfluoroctyl)cyclopentadienyl)-hafniumdichlorid

Eine Lösung von 0,87 g 1'H, 1'H, 2'H, 2'H-Perfluoroctylcyclopentadien aus Beispiel 5 in 60 ml Tetrahydrofuran wird bei -78°C mit 1.21 ml 1.65M Butyllithium-Lösung versetzt und mit einer gekühlten Suspension von 0,305 g Hafniumtetrachlorid in 40 ml Tetrahydrofuran versetzt. Man läßt auf Raumtemperatur erwärmen und entfernt das Lösemittel im Vakuum. Das Produkt wird mittels Extraktion mit Methylenchlorid isoliert
Ausbeute: 0,38 g (38%)
¹H-NMR: ([D₆]-Benzol; 200.1 MHz; 300 K): d = 5.57 (pt, 4H, RCpH); 5.47 (pt, 4H, RCpH); 2.86 (m, 4H, 1 '-H); 2.10 (m, 4H, 2'-H) ppm.
¹⁹F-NMR: ([D₆]-Benzol; 282.4 MHz; 300K): d = -81.2 (m, 6F, 8'-F); -114.5 (m, 4F, 3'-F); -121.9 (m, 4F, 4'-F); -122.9 (m, 4F, 7'-F); -123.4 (m, 4F, 6'-F); -126.2 (m, 4F, 5'-F) ppm.

### Beispiel 8 (Vergleich)

### Synthese von ((1'H, 1'H, 2'H, 2'H-perfluoroctyl)cyclopentadienyl)-(cyclopentadienyl)zirconiumdichlorid

Eine Lösung von 1.31 g 1'H, 1'H, 2'H, 2'H-Perfluoroctylcyclopentadien aus Beispiel 5 in 25 ml Tetrahydrofuran wird bei -78°C mit 2 ml 1.65M Butyllithium-Lösung versetzt und mit einer gekühlten Suspension von 1.28 g

Cyclopentadienylzirconiumtrichlorid-THF-Addukt in 40 ml Tetrahydrofuran versetzt. Man läßt auf Raumtemperatur erwärmen und entfernt das Lösemittel im Vakuum. Das Produkt wird mittels Extraktion mit Methylenchlorid und Pentan isoliert. Ausbeute: 1.73 g (86%)

¹H-NMR: ([D]-Chloroform; 200.1 MHz; 300 K): d = 6.47 (s, 5H, CpH); 6.32 (pt, 2H, RCpH); 6.23 (pt, 2H, RCpH); 2.98 (m, 2H, 1'H); 2.38 (m, 2H, 2'H) ppm.
¹⁹F-NMR: ([D]-Chloroform; 282.4 MHz; 300K): d = -81.0 (m, 3F, 8'-F): -114.5 (m, 2F, 3'-F); -122.0 (m, 2F, 4'-F); -123.0 (m, 2F, 7'-F); -123.6 (m, 2F, 6'-F); -126.3 (m, 2F, 5'-F) ppm.

### Beispiel 9 (Vergleich)

### Synthese von (1'H, 1'H, 2'H, 2'H-perfluoroctylcyclopentadienyl)-(pentamethylcyclopentadienyl)zirconiumdichlorid

Eine Lösung von 1.39 g 1'H, 1'H, 2'H, 2'H-Perfluoroctylcyclopentadien aus Beispiel 5 in 50 ml Tetrahydrofuran wird bei -78°C mit 2.1 ml 1.65M Butyllithium-Lösung versetzt und mit einer gekühlten Suspension von 1.11 g Pentamethylcyclopentadienylzirconiumtrichlorid in 30 ml Tetrahydrofuran versetzt.
Man läßt auf Raumtemperatur erwärmen und entfernt das Lösemittel im Vakuum.
Das Produkt wird mittels Extraktion mit Methylenchlorid und Pentan isoliert.
Ausbeute: 1.9 g (81%)

¹H-NMR: ([D]-Chloroform; 200.1 MHz; 300 K): d = 6.06 (pt, 2H, RCpH); 5.94 (pt, 2H, RCpH); 3.72 (m, 2H, 1'-H); 2.97 (m, 2H, 2'-H); 2.02 (s, 15H, Cp(CH₃)₅) ppm.
¹⁹F-NMR: ([D]-Chloroform; 282.4 MHz; 300K): d = -80.9 (m, 3F, 8'-F); -114.5 (m, 2F, 3'-F); -122.2 (m, 2F, 4'-F); -123.0 (m, 2F, -7'-F); -123.6 (m, 2F, 6'-F); -126.3 (m, 2F, 5'-F)ppm.

### Beispiel 10

### Synthese von Bis (2',2',2'-trifluorethyl)cyclopentadienyl)zirconiumdimethyl

Zu einer Suspension von 1.05 g Bis (2',2',2'trifluorethyl)cyclopentadienyl)zirkoniumdichlorid aus Beispiel 2 in 40 ml Diethylether gibt man bei -78°C langsam 2.79 ml 1.68M Methyllithium-Lösung in Diethylether. Man läßt auf Raumtemperatur erwärmen und entfernt das Lösemittel im Ölpumpenvakuum. Das Produkt wird mittels Extraktion mit Pentan isoliert. Ausbeute: 0,614 g (73%)
¹H-NMR: ([D₆]-Benzol; 200.1 MHz; 300 K): d = 5.62 (pt, 4H, RCpH); 5.21 (pt, 4H, RCpH); 2.87 (q, ³J_{FH} = 10.6 Hz, 4H, 1 '-H); -0.52 (s, 6H, Zr-CH₃) ppm.

### Beispiel 11 (Vergleich)

### Synthese von (2',2',2'-Trifluorethylcyclopentadienyl)(cyclopentadienyl)-zirconiumdimethyl

Zu einer Suspension von 0,252 g (2',2',2'-Trifluorethyl)cyclopentadienyl)-(cyclopentadienyl)zirkoniumdichlorid aus Beispiel 3 in 25 ml Diethylether gibt man bei -78°C langsam 0,8 ml 1.68M Methyllithium-Lösung in Diethylether. Man läßt auf Raumtemperatur erwärmen und entfernt das Lösemittel im Ölpumpenvakuum. Das Produkt wird mittels Extraktion mit Pentan isoliert. Ausbeute: 0,162 g (73%)

¹H-NMR: ([D₆]-Benzol;-200-.1-MHz;-300 K): d = 5.64 (s, 5H, CpH); 5.63 (pt, 2H, RCpH); 5.27 (pt, 2H, RCpH); 2.87 (q, ³J_{FH} = 10.8 Hz, 2H, 1'-H); -0.32 (s, 6H, Zr- (CH₃) ppm.

### Beispiel 12

### Synthese von Bis((1'H, 1'H, 2'H, 2'H-perfluoroctyl)cyclopentadienyl)-zirconiumdimethyl

Zu einer Suspension von 0,51g Bis((1'H, 1'H, 2'H, 2'H-perfluoroctyl)-cyclopentadienyl)titandichlorid aus Beispiel 5 in 50 ml Diethylether gibt man bei-78°C langsam 1,04 ml 1.68M Methyllithium-Lösung in Diethylether. Man läßt auf Raumtemperatur erwärmen und entfernt das Lösemittel im Ölpumpenvakuum. Das Produkt wird mittels Extraktion mit Pentan isoliert. Ausbeute: 0,302 g (65%)

¹H-NMR: ([D₆]-Benzol; 200.1 MHz; 300 K): d = 5.46 (pt, 4H, RCpH); 5.37 (pt, 4H, RCpH); 2.60 (m, 4H, 1 '-H); 2.05 (m, 4H, 2'H); -0.29 (s, 6H, Zr-CH₃) ppm.

### Beispiel 13 (Vergleich)

### Synthese von (1'H, 1'H, 2'H, 2'H-Perfluoroctylcyclopentadienyl)-(cyclopentadienyl)zirconiumdimethyl

Zu einer Suspension von 0,525 g (1'H, 1'H, 2'H, 2'H-Perfluoroctylcyclopentadienyl)(cyclopentadienyl)zirconiumdichlorid aus Beispiel 8 in 40 ml Diethylether gibt man bei -78°C langsam 1,03 ml 1.68M Methyllithium-LÖsung in Diethylether. Man läßt auf Raumtemperatur erwärmen und entfernt das Lösemittel im Ölpumpenvakuum. Das Produkt wird mittels Extraktion mit Pentan isoliert. Ausbeute: 0,257 g (55%)

¹H-NMR: ([D₆]-Benzol; 200.1 MHz; 300 K): d = 5.70 (s, 5H, CpH); 5.45 pt, 2H, RCpH); 5.36 (pt, 2H, RCpH); 2.60 (m, 2H, 1 '-H); 2.09 (m, 2H, 2'H); -0.21 (s, 6H, Zr-(CH₃)₂) PPm.

### Beispiel 14 (Vergleich)

### (1'H, 1'H, 2'H, 2'H-Perfluoroctylcyclopentadienyl)(pentamethylcyclopentadienyl)-zirconiumdimethyl

Zu einer Suspension von 1,9 g (1'H, 1'H, 2'H, 2'H-Perfluoroctylcyclopentadienyl)-(pentamethylcyclopentadienyl)zirconiumdichlorid aus Beispiel 9 in 40 ml Diethylether gibt man bei -78°C langsam 2,7 ml 1.68M Methyllithium-Lösung in Diethylether. Man läßt auf Raumtemperatur erwärmen und entfernt das Lösemittel im Ölpumpenvakuum. Das Produkt wird mittels Extraktion mit Pentan isoliert. Ausbeute:

¹H-NMR: ([D₆]-Benzol; 200.1 MHz; 300 K): d = 5.51 (pt, 2H, RCpH); 5.28 (pt, 2H, RCpH); 2.74 (m, 2H, 1'-H); 2.13 (m, 2H, 2'-H); 1.67 (s, 15H, Cp(CH₃)₅); -0.44 (s, 6H, Zr-CH₃) ppm.

### Beispiel 15

### Synthese von Bis ((2, 2', 2', trifluorethyl)cyclopentadienyl)hafniumdimethyl

Zu einer Suspension von 0,5 g Bis ((2, 2', 2', trifluorethyl)cyclopentadienyl)-hafniumdichlorid aus Beispiel 4 in 50 ml Diethylether gibt man bei -78°C langsam 1,1 ml 1.68M Methyllithium-Lösung in Diethylether. Man faßt auf Raumtemperatur erwärmen und entfernt das Lösemittel im Ölpumpenvakuum. Das Produkt wird mittels Extraktion mit Pentan isoliert.
Ausbeute: 0,358 g (83%)

¹H-NMR: ([D₆]-Benzol; 200.1 MHz; 300 K): d = 5.52 (pt, 4H, RCpH); 5.16 (pt, 4H, RCpH); 2.87 (q, ³J_{FH}= 10.7 Hz, 4H, 1'-H); -0.71 (s, 6H, Hf-CH₃)ppm.

### Beispiel 16

### Synthese von Bis((1'H, 1'H, 2'H, 2'H-perfluoroctyl)cyclopentadienyl)-hafniumdimethyl

Zu einer Suspension von 0,222 g Bis((1'H, 1 'H, 2'H, 2'H-perfluoroctyl)-cyclopentadienyl)hafniumdichlorid aus Beispiel 7 in 40 ml Diethylether gibt man bei-78°C langsam 0,25 ml 1.68M Methyllithium-Lösung in Diethylether. Man läßt auf Raumtemperatur erwärmen und entfernt das Lösemittel im Ölpumpenvakuum. Das Produkt wird mittels Extraktion mit Pentan isoliert.
Ausbeute: 0,197 g (91%)

¹H-NMR: ([D₆]-Benzol; 200.1 MHz; 300 K): d = 5,38 (pt, 4H, RCpH); 5.31 (pt, 4H, RCpH); 2.59 (m, 4H, 1'-H); 2.08 (m. 4H, 2'-H); -0.47 (s, 6H, Hf-CH₃) ppm.

### Beispiel 17

### Polymerisation von Propen

In einem 1-1-Glasautoklaven werden 200 ml Toluol und 19 ml 10,5%ige Methylaluminoxanlösung in Toluol vorgelegt. Dazu wird eine Lösung von 1 ml 10,5%ige Methylaluminoxanlösung in Toluol und 40 mg Bis((1'H, 1'H, 2'H, 2'H-perfluoroctyl)cyclopentadienyl)zirconiumdichlorid gegeben. Anschließend wird die Polymerisationstemperatur von 0°C eingestellt und 2 bar Propen aufgedrückt und im Verlauf der Polymerisation mittels Nachdosieren gehalten. Die Poylmerisation wird gestoppt durch Zugabe 20 ml Methanol/2N-Salzsäure (1:1). Das erhaltene Polypropylen wird abfiltriert und im Ölpumpenvakuum getrocknet.
Aktivität: 33 g/(mmol · bar · h)

### Beispiel 18 (Vergleich)

### Polymerisation von Propen

In einem 1-I-Glasautoklaven werden 200 ml Toluol und 19 ml 10,5%ige Methylaluminoxanlösung in Toluol vorgelegt. Dazu wird eine Lösung von 1 ml 10,5%ige Methylaluminoxanlösung in Toluol und 15 mg (1'H, 1'H, 2'H, 2'H-perfluoroctyl)cyclopentadienyl)(cyclopentadienyl)zirconiumdichlorid gegeben. Anschließend wird die Polymerisationstemperatur von 0°C eingestellt und 2 bar Propen aufgedrückt und im Verlauf der Polymerisation mittels Nachdosieren gehalten. Die Poylmerisation wird gestoppt durch Zugabe 20 ml Methanol/2N-Salzsäure (1:1). Das erhaltene Polypropylen wird abfiltriert und im Ölpumpenvakuum getrocknet.
Aktivität: 144 g/(mmol · bar ·h)

### Beispiel 19

### Polymerisation von Ethen

In einem 1-I-Glasautoklaven werden 200 ml Toluol und 19 ml 10,5%ige Methylaluminoxanlösung in Toluol vorgelegt. Dazu wird eine Lösung von 1 ml 10,5%ige Methylaluminoxanlösung in Toluol und 16 mg Bis (2',2',2'trifluorethyl)cyclopentadienyl)zirconiumdichlorid gegeben. Anschließend wird die Polymerisationstemperatur von 10°C eingestellt und 2 bar Ethen aufgedrückt und im Verlauf der Polymerisation mittels Nachdosieren gehalten. Die Poylmerisation wird gestoppt durch Zugabe 20 ml Methanol/2N-Salzsäure (1:1). Das erhaltene Polyethylen wird abfiltriert und im Ölpumpenvakuum getrocknet.
Aktivität: 857 g/(mmol · bar ·h)

### Beispiel 20

### Polymerisation von Ethen

In einem 1-I-Glasautoklaven werden 200 ml Toluol und 19 ml 10,5%ige Methylaluminoxanlösung in Toluol vorgelegt. Dazu wird eine Lösung von 1 ml 10,5%ige Methylaluminoxanlösung in Toluol und 15 mg Bis((1'H, 1'H, 2'H, 2'H-perfluoroctyl)cyclopentadienyl)zirconiumdichlorid gegeben. Anschließend wird die Polymerisationstemperatur von 10°C eingestellt und 2 bar Ethen aufgedrückt und im Verlauf der Polymerisation mittels Nachdosieren gehalten. Die Poylmerisation wird gestoppt durch Zugabe 20 ml Methanol/2N-Salzsäure (1:1). Das erhaltene Polyethylen wird abfiltriert und im Ölpumpenvakuum getrocknet.
Aktivität: 600 g/(mmol · bar · h)

### Beispiel 21

### Polymerisation von Methylvinylketon

Zu einer auf 0°C gekühlten Lösung von 18 mg Bis (2',2',2'trifluorethyl)cyclopentadienyl)zirconiumdimethyl und 82 mg Tris(pentafluorphenyl)boran in 20 ml Methylenchlorid werden 2 ml Methylvinylketon gegeben. Man läßt 1h rühren und quentscht mittels Zugabe von 1 ml Methanol und entfernt dann überschüssiges Monomer im Ölpumpenvakuum.
Aktivität: 3,8 g/(mmol·h)

## Patentansprüche

1. Katalysatorsystem enthaltend
(a) mindestens einen Cokatalysator,
(b) mindestens eine metallorganische Verbindung der Formel (I) 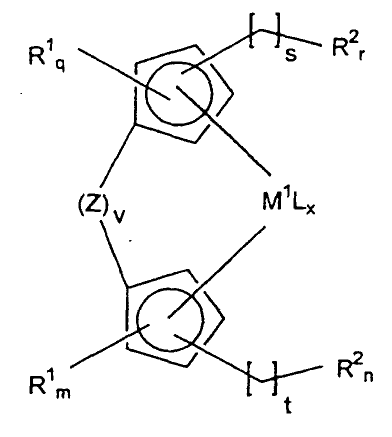 worin.
M¹ ein Metall der Gruppe 3, 4, 5 oder 6 des Periodensystems der Elemente sowie Lanthanide oder Actinide bedeutet,
R¹ gleich oder verschieden sind und ein Wasserstoffatom, eine C₁-C₃₀-kohlenstoffhaltige Gruppe, SiR³,worin R³ gleich oder verschieden ein Wasserstoffatom oder eine C₁-C₄₀-kohlenstoffhaltige Gruppe sind, oder zwei oder mehrere Reste R¹ können so miteinander verbunden sein, daß die Reste R¹ und die sie verbindenden Atome des Cyclopentadienylringes ein C₄-C₂₄-Ringsystem bilden, welches seinerseits substituiert sein kann,
R² gleich oder verschieden sind und ein fluorhaltiges C₁-C₂₅-Alkyl oder fluorhaltiges C₁-C₂₅-Alkenyl bedeuten,
r, n gleich oder verschieden sind und 1, 2, 3, 4 oder 5 bedeuten,
m, q gleich oder verschieden sind und 0, 1, 2, 3 oder 4 bedeuten,
q+r gleich 5 für v = 0, und q+r gleich 4 für v = 1 ist,
m+n gleich 5 für v = 0, und m+n gleich 4 für v = 1 ist,
s, t gleich oder verschieden sind und eine ganze Zahl von 1 bis 20 bedeuten,
L gleich oder verschieden sind und ein Halogenatom oder einen kohlenwasserstoffhaltigen Rest mit 1-20 Kohlenstoffatomen bedeuten,
x eine ganze Zahl von 1 bis 4 ist, wobei im Falle von M¹ = Ti, Zr oder Hf x bevorzugt gleich 2 ist,
Z ein verbrückendes Strukturelement zwischen den beiden
Cyclopentadienylringen bezeichnet, und v ist 0 oder 1, bedeutet,
sowie gegebenenfalls
(c) mindestens einen Träger.

2. Katalysatorsystem gemäß Anspruch 1, **dadurch gekennzeichnet, daß** in Formel (I)
M¹ gleich Titan, Zirkonium oder Hafnium,
R¹ gleich oder verschieden sind und C₁-C₂₅-Alkyl, C₂-C₂₅ Alkenyl, C₃-C₁₅-Alkylalkenyl, C₆-C₂₄-Aryl, C₅-C₂₄-Heteroaryl, C₇-C₃₀-Arylalkyl, C₇-C₃₀-Alkylaryl, C₁-C₁₂-Alkoxy, SiR³,worin R³ gleich oder verschieden C₁-C₂₀-Alkyl, C₁-C₁₀-Fluoralkyl, C₁-C₁₀-Alkoxy, C₆-C₂₀-Aryl, C₆-C₁₀-Fluoraryl, C₆-C₁₀-Aryloxy, C₂-C₁₀-Alkenyl, C₇-C₄₀-Arylalkyl, C₇-C₄₀-Alkylaryl oder C₈-C₄₀-Arylalkenyl sind,
L gleich oder verschieden sind und C₁-C₂₀-Alkyl, C₂-C₂₀-Alkenyl, C₁-C₂₀-Alkoxy, C₆-C₁₄-Aryloxy oder C₆-C₄₀-Aryl, bedeuten.

3. Katalysatorsystem gemäß Anspruch 1, **dadurch gekennzeichnet, daß** in Formel (I)
R¹ gleich oder verschieden sind und Methyl, Ethyl, tert.-Butyl, Cyclohexyl, Octyl, Pyridyl, Furyl oder Chinolyl, bedeuten.

4. Katalysatorsystem gemäß Anspruch 1, **dadurch gekennzeichnet, daß** in Formel (I)
Z gleich M²R⁴R⁵, worin M² Kohlenstoff, Silizium, Germanium oder Zinn ist und R⁴ und R⁵ gleich oder verschieden eine C₁-C₂₀-Kohlenwasserstoffgruppe wie C₁-C₁₀-Alkyl oder C₆-C₁₄-Aryl bedeuten.

5. Katalysatorsystem gemäß Anspruch 1, **dadurch gekennzeichnet, daß** in Formel (I) Z gleich CH₂, CH₂CH₂, CH(CH₃)CH₂, CH(C₄H₉)C(CH₃)₂, C(CH₃)₂, (CH₃)₂Si, (CH₃CH₂)₂Si, (CH₃)((CH₃)₃C)Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ oder 2,2'-(C₆H₄)₂ ist.

6. Verfahren zur Herstellung von Polyolefinen durch Polymerisation von Olefin in Gegenwart mindestens eines Katalysatorsystems nach einem der Ansprüche 1 bis 5.

7. Verwendung eines Katalysatorsystems nach einem der Ansprüche 1 bis 5 zur Herstellung von Polyolefinen.

## Claims

1. A catalyst system comprising
(a) at least one cocatalyst,
(b) at least one organometallic compound of the formula (I) 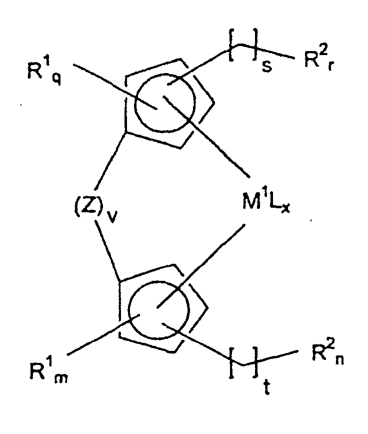 where
M¹ is a metal of group 3, 4, 5 or 6 of the Periodic Table of the Elements or a lanthanide or actinide,
R¹ are identical or different and are each a hydrogen atom, a C₁-C₃₀-hydrocarbyl group, SiR³, where R³ are identical or different and are each a hydrogen atom or a C₁-C₄₀-hydrocarbyl group, or two or more radicals R¹ may be joined to one another in such a way that the radicals R¹ and the atoms of the cyclopentadienyl ring which connect them form a C₄-C₂₄ ring system which may in turn be substituted,
R² are identical or different and are each fluorine-containing C₁-C₂₅-alkyl or fluorine-containing C₁-C₂₅-alkenyl,
r, n are identical or different and are 1, 2, 3, 4 or 5,
m, q are identical or different and are 0, 1, 2, 3 or 4,
q+r is 5 when v = 0, and q+r is 4 when v = 1,
m+n is 5 when v = 0, and m+n is 4 when v = 1,
s, t are identical or different and are each an integer from 1 to 20,
L are identical or different and are each a halogen atom or a hydrocarbyl radical having 1-20 carbon atoms,
x is an integer from 1 to 4, with x preferably being 2 when M¹ = Ti, Zr or Hf,
Z is a bridging structural element between the two cyclopentadienyl rings, and v is 0 or 1,
and, if desired,
(c) at least one support.

2. A catalyst system as claimed in claim 1, wherein, in the formula (I),
M¹ is titanium, zirconium or hafnium,
R¹ are identical or different and are each C₁-C₂₅-alkyl, C₂-C₂₅-alkenyl, C₃-C₁₅-alkylalkenyl, C₆-C₂₄-aryl, C₅-C₂₄-heteroaryl, C₇-C₃₀-arylalkyl, C₇-C₃₀-alkylaryl, C₁-C₁₂-alkoxy or SiR³, where R³ are identical or different and are each C₁-C₂₀-alkyl, C₁-C₁₀-fluoroalkyl, C₁-C₁₀-alkoxy, C₆-C₂₀-aryl, C₆-C₁₀-fluoroaryl, C₆-C₁₀-aryloxy, C₂-C₁₀-alkenyl, C₇-C₄₀-arylalkyl, C₇-C₄₀-alkylaryl or C₈-C₄₀-arylalkenyl,
L are identical or different and are each C₁-C₂₀-alkyl, C₂-C₂₀-alkenyl, C₁-C₂₀-alkoxy, C₆-C₁₄-aryloxy or C₆-C₄₀-aryl.

3. A catalyst system as claimed in claim 1, wherein, in the formula (1),
R¹ are identical or different and are each methyl, ethyl, tert-butyl, cyclohexyl, octyl, pyridyl, furyl or quinolyl.

4. A catalyst system as claimed in claim 1, wherein, in the formula (1),
Z is M²R⁴R⁵, where M² is carbon, silicon, germanium or tin and R⁴ and
R⁵ are identical or different and are each a C₁-C₂₀-hydrocarbyl group such as C₁-C₁₀-alkyl or C₆-C₁₄-aryl.

5. A catalyst system as claimed in claim 1, wherein, in the formula (I), Z is CH₂, CH₂CH₂, CH(CH₃)CH₂, CH(C₄H₉)C(CH₃)₂, C(CH₃)₂, (CH₃)₂Si, (CH₃CH₂)₂Si, (CH₃)((CH₃)₃C)Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ or 2,2'-(C₆H₄)₂.

6. A process for preparing polyolefins by polymerization of olefins in the presence of at least one catalyst system as claimed in any of claims 1 to 5.

7. The use of a catalyst system as claimed in any of claims 1 to 5 for preparing polyolefins.

## Revendications

1. Système de catalyseur contenant
(a) au moins un cocatalyseur,
(b) au moins un composé organométallique de formule (I) 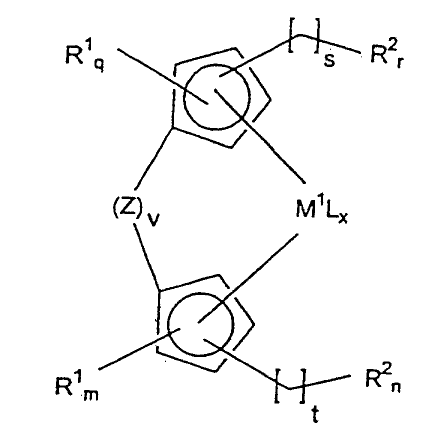 où
M¹ désigne un métal du groupe 3, 4, 5 ou 6 de la classification périodique des éléments, ainsi que des lanthanides ou des actinides,
R¹ sont identiques ou différents et représentent un atome d'hydrogène, un groupe contenant du carbone en C₁-C₃₀, SiR³, où les R³, identiques ou différents, sont un atome d'hydrogène ou un groupe contenant du carbone en C₁-C₄₀, ou deux ou plus de deux restes R¹ peuvent être liés entre eux de telle manière que les restes R¹ et les atomes du cycle cyclopentadiényle les reliant forment un système cyclique en C₄-C₂₄, qui peut quant à lui être substitué,
R² sont identiques ou différents et désignent un alkyle en C₁-C₂₅ contenant du fluor ou un alcényle en C₁-C₂₅ contenant du fluor,
r,n sont identiques ou différents et valent 1, 2, 3, 4 ou 5,
m,q sont identiques ou différents et valent 0, 1, 2, 3 ou 4,
q+r vaut 5 pour v = 0, et q+r vaut 4 pour v = 1,
m+n vaut 5 pour v = 0, et m+n vaut 4 pour v = 1,
s,t sont identiques ou différents et désignent un nombre entier de 1 à 20,
L sont identiques ou différents et représentent un atome d'halogène ou un reste hydrocarboné ayant 1-20 atomes de carbone,
x est un nombre entier de 1 à 4, tandis que dans le cas où M¹ = Ti, Zr ou Hf x vaut de préférence 2,
Z désigne un élément structural pontant entre les deux cycles cyclopentadiényle, et v vaut 0 ou 1,
ainsi qu'éventuellement
(c) au moins un support.

2. Système de catalyseur selon la revendication 1, **caractérisé par le fait que** dans la formule (I)
M¹ désigne le titane, le zirconium ou le hafnium,
R¹ sont identiques ou différents et sont alkyle en C₁-C₂₅, alcényle en C₂-C₂₅, alkylalcényle en C₃-C₁₅, aryle en C₆-C₂₄, hétéroaryle en C₅-C₂₄, arylalkyle en C₇-C₃₀, alkylaryle en C₇-C₃₀, alcoxy en C₁-C₁₂, SiR³, tandis que R³, identiques ou différents, sont alkyle en C₁-C₂₀, fluoroalkyle en C₁-C₁₀, alcoxy en C₁-C₁₀, aryle en C₆-C₂₀, fluoroaryle en C₆-C₁₀, aryloxy en C₆-C₁₀. alcényle en C₂-C₁₀, arylalkyle en C₇-C₄₀, alkylaryle en C₇-C₄₀ ou arylalcényle en C₆-C₄₀,
L sont identiques ou différents et désignent alkyle en C₁-C₂₀, alcényle en C₂-C₂₀, alcoxy en C₁-C₂₀, aryloxy en C₆-C₁₄ ou aryle en C₆-C₄₀.

3. Système de catalyseur selon la revendication 1, **caractérisé par le fait que** dans la formule (I)
R¹ sont identiques ou différents et désignent méthyle, éthyle, tert-butyle, cyclohexyle, octyle, pyridyle, furyle ou quinoléyle.

4. Système de catalyseur selon la revendication 1, **caractérisé par le fait que** dans la formule (I)
Z désigne M²R⁴R⁵, où M² est le carbone, le silicium, le germanium ou l'étain, et R⁴ et R⁵, identiques ou différents; désignent un groupe hydrocarboné en C₁-C₂₀ tel que alkyle en C₁-C₁₀ ou aryle en C₆-C₁₄.

5. Système de catalyseur selon la revendication 1, **caractérisé par le fait que** dans la formule (I) Z représente CH₂, CH₂CH₂, CH(CH₃)CH₂, CH(C₄H₉)C(CH₃)₂, C(CH₃)₂, (CH₃)₂Si, (CH₃CH₂)₂Si, (CH₃)((CH₃)₃C)Si, (CH₃)₂Ge, (CH₃)₂Sn, (C₆H₅)₂Si, (C₆H₅)(CH₃)Si, (C₆H₅)₂Ge, (C₆H₅)₂Sn, (CH₂)₄Si, CH₂Si(CH₃)₂, o-C₆H₄ ou 2,2'-(C₆H₄)₂.

6. Procédé pour la préparation de polyoléfines par polymérisation d'oléfine en présence d'au moins un système de catalyseur selon l'une des revendications 1 à 5.

7. Utilisation d'un système de catalyseur selon l'une des revendications 1 à 5 pour la préparation de polyoléfines.
